# EUROPEAN PATENT SPECIFICATION

(11) **EP 1 474 983 B1**
(45) Date of publication and mention of the grant of the patent: **26.07.2006**
(21) Application number: 04250853.1
(22) Date of filing: 18.02.2004
(51) Int. Cl.: A21B 7/00, A47J 43/00

(54) **Improvements in and relating to bread makers**
Verbesserungen einer Brotbackmaschine
Améliorations pour un appareil de cuisson de pain

(30) Priority: 07.05.2003 KR 2003029090
(43) Date of publication of application: 10.11.2004
(73) Proprietor: SAMSUNG ELECTRONICS CO., LTD., Suwon-si, Gyeonggi-do (KR)
(72) Inventor: Sung, Han-jun, Paldal-ku Suwon city Kyungki-do (KR); Kwon, Yong-hyun, Paldal-ku Suwon city Kyungki-do (KR); Kim, Chul, Dongan-ku Anyang city Kyungki-do (KR); Lee, Tae-uk, Suwon city Kyungki-do (KR); Park, Jae-ryong, Paldal-ku Suwon city Kyungki-do (KR); Lee, Jang-woo, Suwon city Kyungki-do (KR); Lim, Dong-bin, Paldal-ku Suwon city Kyungki-do (KR)
(74) Representative: Brandon, Paul Laurence

(56) References cited:
- EP-A- 1 382 251
- US-A- 3 687 251
- US-A- 4 590 850
- US-A- 5 947 009

## Description

The present invention relates to bread makers and to driving mechanisms, and more particularly, but not exclusively, to bread makers having an improved driving force transmission structure.

Conventionally, various bread makers have been developed allowing a user to easily make bread by automatically performing multiple steps such as kneading, leavening and baking of raw materials in order to provide finished bread to the user.

For example, a bread maker disclosed in Korean Patent Publication No. 1991-10203 includes a pair of parallel kneading drums which are disposed at upper and lower parts of an oven compartment and rotated in clockwise and counterclockwise directions; a baking tray placed between the pair of kneading drums; and a heater to heat the inside of the oven compartment.

In this bread maker, opposite ends of a mixing bag filled with raw materials for bread, such as flour and baking powder, are wound by the pair of the kneading drums and then the mixing bag is reciprocated up and down for a predetermined period of time, so that the raw materials for bread in the mixing bag are kneaded.

Thereafter, a cutting unit cuts the mixing bag, so that only the kneaded dough moves into the baking tray. Then, the heater heats the interior of the oven compartment, making bread in the baking tray by leavening and baking the dough for a predetermined period of time.

In the conventional bread maker, a reversible type motor rotates the pair of kneading drums reciprocating the mixing bag up and down. The mechanism for transmitting the driving force generated by the motor to the kneading drums needs to be efficiently designed for high productivity in such a way that each part thereof can be easily replaced so as to reduce assembling process time.

Document US-4 590 850 discloses the preamble of claim 1.

Accordingly, it is an aim of preferred embodiments of the present invention to provide a bread maker having an improved driving force transmission mechanism providing an increase in productivity by reducing the time required for assembling the bread maker.

According to the present invention, there is provided a bread maker comprising an oven compartment and a component compartment, wherein the component compartment further comprises a drum driving mechanism, the drum driving mechanism including: a driving motor rotating a first kneading drum; a reduction gear controlling the number of rotations of the driving motor; a connector connecting an output shaft of the reduction gear and connecting a first driving shaft part of the first kneading drum; a second pulley rotatably coupled to a second driving shaft part of a second kneading drum; a first pulley rotatably coupled to the first driving shaft part of the first kneading drum; a driving belt coupled to the first and second pulleys and rotating the first and second kneading drums; and an engager provided between the connector and the first pulley; wherein the engager further includes a plurality of engaging projections projecting in a radial direction on an outer surface side of the connector, and a plurality of projections accommodating grooves provided at corresponding positions of the first pulley to accommodate the engaging projections of the connector.

Further features of the present invention are set out in the appended claims.

The present invention will become apparent and more readily appreciated from the following description of the embodiments, by way of example only, taken in conjunction with the accompany drawings of which:
FIG. 1 is a perspective view of a bread maker according to the present invention;
FIG. 2 is a partially cut-away perspective view of a component compartment of FIG. 1;
FIG. 3 is an exploded perspective view of a drum driving part of FIG. 2.

Reference will now be made in detail to the embodiments of the present invention, examples of which are illustrated in the accompanying drawings, wherein like reference numerals refer to like elements throughout. The embodiments are described below in order to explain the present invention by referring to the figures.

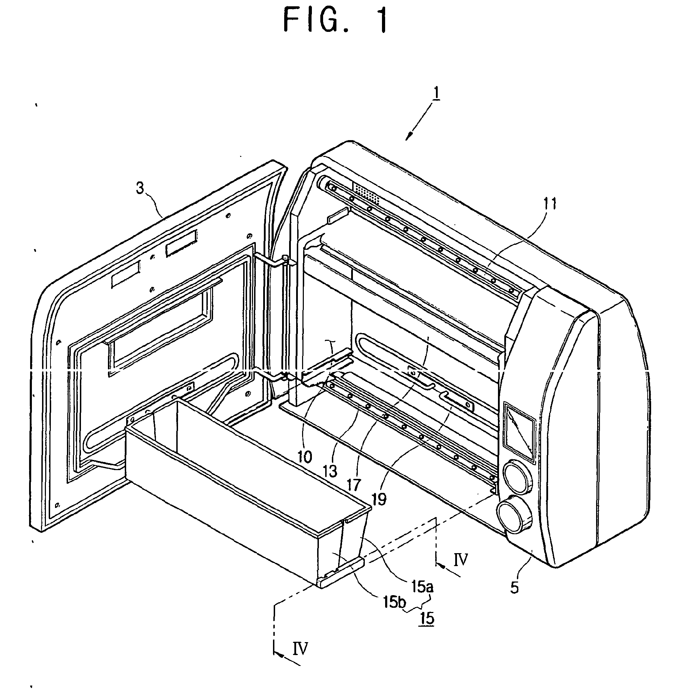

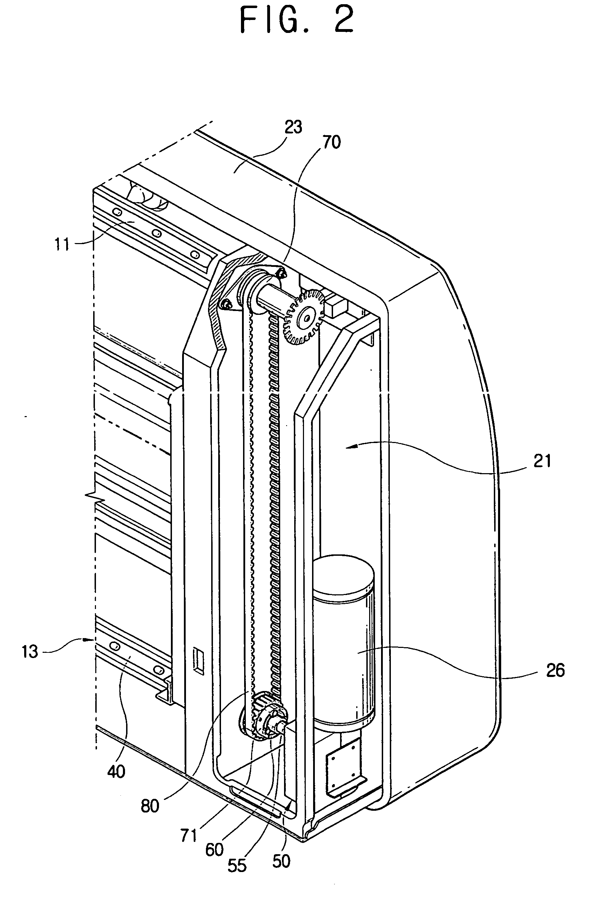

As shown in FIGS. 1 through 3, a bread maker of an embodiment of the present invention comprises: a main body 1 divided into an oven compartment 10 and a component compartment 5; a door 3 in the front of the main body 1 to open and close a front opening of the oven compartment 10; and an operation display panel (not shown) on a front side of the main body 1 to display an operation state of the main body 1.

In upper and lower parts inside of the oven compartment 10 are placed upper and lower kneading drums 11 and 13 which are rotatably disposed in parallel to wind a predetermined length of opposite ends of a mixing bag (not shown), filled with raw materials for making bread, in clockwise and counterclockwise directions. In a lower part of the oven compartment 10, a baking tray 15 containing kneaded materials therein is provided between the upper and lower kneading drums 11 and 13. Between the upper kneading drum 11 and the baking tray 15 is placed a pair of dough-blocking members 17 preventing the raw materials kneaded in the mixing bag from being moved toward the upper kneading drum 11.

The respective upper and lower kneading drums 11 and 13 have almost the same shape. Each of the kneading drums comprises: a drum main body 40 which is formed along a longitudinal direction thereof with a plurality of holding projections (not shown) to be inserted in holding holes (not shown) formed at end parts of the mixing bag; the driving shaft part 41 which is extended outward from one end of the drum main body 40 and is rotatably supported on a wall of a first component compartment 21 (to be described later); and a supporting shaft part (not shown) which is extended outward from the other end of the drum main body 40 and is supported on the inner wall of the oven compartment 10 on the opposite side of the wall supporting the driving shaft part 41 so as to be rotated in clockwise and counterclockwise directions.

The baking tray 15 forms a box having a top opening by combining first and second trays 15a and 15b of "L" shapes symmetrical to each other.

At upper and lower parts of the rear inner wall of the oven compartment 10 and upper and lower parts of the inside wall of the door 3, baking heaters 19 are provided to heat the inside of the oven compartment 10.

The component compartment 5 includes the first component compartment 21 beside the oven compartment 10 and a second component compartment 23 behind the oven compartment 10. Inside the first component compartment 21 is placed a drum driving part (to be described later) rotating the upper and lower kneading drums 11 and 13 in clockwise and counterclockwise directions.

The drum driving part comprises: a driving motor 26 to rotate the lower kneading drum 13; a reduction gear 50 reducing the number of rotations of the driving motor 26; a connector 60 connecting an output shaft 55 of the reduction gear 50 and the driving shaft part 41 of the lower kneading drum 13; upper and lower pulleys 70 and 71 rotatably connected to the driving shaft parts 41 of the upper and lower kneading drums 11 and 13; and a driving belt 80 which is connected to the pair of pulleys 70 and 71 and rotates the upper and lower kneading drums 11 and 13.

A driving force generated by the driving motor 26 is used to rotate the lower kneading drum 13 and transmitted to the driving shaft part 41 of the lower kneading drum 13 connected to the output shaft 55 and the connector 60 by means of the reduction gear 50 located in the lower part of the driving motor 26.

The reduction gear 50 comprises a worm gear set having a worm 53 and a worm wheel 54 in a gear case 51 located under the driving motor 26 and accommodating the worm gear set.

The worm 53 is connected to the end of the shaft 52 of the driving motor 26 and the worm wheel 54 is connected to the output shaft 55, which in turn is connected to the driving shaft part 41 of the lower kneading drum 13 by the connector 60 and is engaged with the worm 53.

One side of the connector 60 is connected to the output shaft 55 having the worm wheel 54 and the other side thereof is connected to the lower pulley 71 rotatably connected to the driving shaft part 41 of the lower kneading drum 13. The connector 60 transmits the driving force from the motor 26 via the reduction gear 50 to the lower kneading drum 13.

Between the connector 60 and the lower pulley 71 is placed an engager to make sure that the driving force speed-reduced of the reduction gear 50 is transmitted to the lower kneading drum, even if the connector 60 and the lower pulley 71 are not assembled at the exact assembling positions.

The engager includes a plurality of engaging projections 90 projected in a radial direction on an outer surface side of the connector 60; and a plurality of projections accommodating grooves 91 provided at a corresponding position of the lower pulley 71 to accommodate the engaging projections 90 of the connector 60.

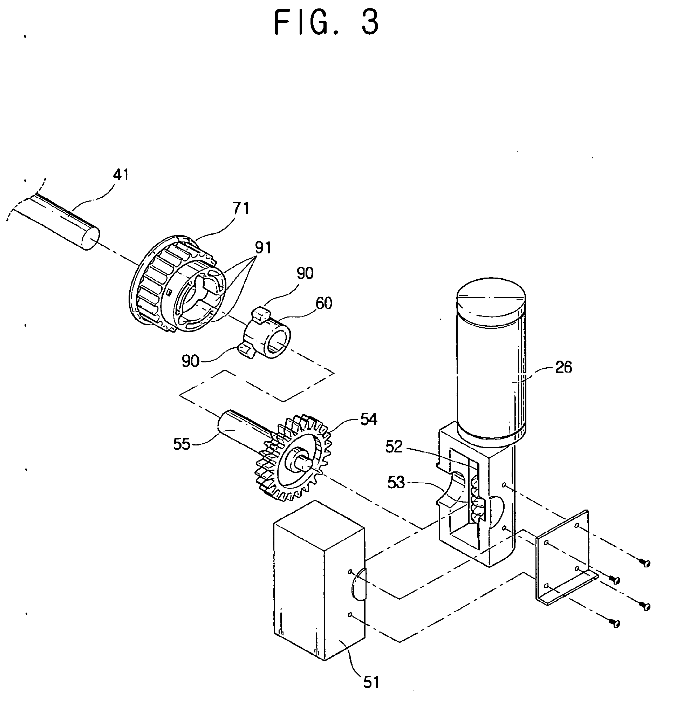

The engaging projections 90 are projected in a radial direction relative to the axis of the output shaft 55 on the outer surface of the connector 60. As shown in FIG. 3, three equally spaced engaging projections 90 are projected on the outer surface of the connector 60.

The projections accommodating grooves 91 of the lower pulley 71 are distributed in a radial direction relative to the axis of the output shaft 55, matching the number of engaging projections 90.

With this configuration, when the driving motor 26 operates, the speed-reduced driving force generated by the driving motor 26 is transmitted to the reduction gear 50. The speed-reduced driving force is responsible for rotating the lower kneading drum 13 as well as the upper kneading drum 11 connected to the lower kneading drum 13 by the transmitting belt 80.

Regarding the assembly of the drum driving part which rotates the upper and lower kneading drums 11 and 13 in clockwise and counterclockwise directions, the connector 60 and the lower pulley 71 can be coupled with much ease only by accommodating the engaging projections 90 of the connector 60 in the projections accommodating grooves 91 of the lower pulley 71. This guarantees that the driving force generated by the driving motor 26 is transmitted to the lower kneading drum 13, even if the connector 60 and the lower pulley 71 are not assembled at the exact assembling positions. This saves time and effort assembling the connector 60 and the lower pulley 71, and further the bread maker as a whole.

As described above, according to preferred embodiments of the present invention, the driving force of the driving motor can be smoothly transmitted to the lower kneading drum, thereby providing increased productivity by reducing time taken for assembling the bread maker.

Although a few embodiments of the present invention have been shown and described, it will be appreciated by those skilled in the art that changes may be made in these embodiments without departing from the principles of the invention, the scope of which is defined in the appended claims.

## Claims

1. A bread maker comprising an oven compartment (10) and a component compartment (5), wherein the component compartment (5) further comprises a drum driving mechanism, the drum driving mechanism including:
a driving motor (26) rotating a first kneading drum (13);
a reduction gear (50) controlling the number of rotations of the driving motor (26);
a connector (60) connecting an output shaft (55) of the reduction gear (50) and a first driving shaft (41) part of the first kneading drum (13);
a second pulley (70) rotatably coupled to a second driving shaft part of a second kneading drum (11);
a first pulley (71) rotatably coupled to the first driving shaft part (41) of the first kneading drum (13) ;
a driving belt (80) coupled to the first and second pulleys (71, 70) and rotating the first and second kneading drums (13, 11); **characterized by**:
an engager provided between the connector (60) and the first pulley (13);
wherein the engager further includes a plurality of engaging projections (90) projecting in a radial direction on an outer surface side of the connector (60), and a plurality of projections accommodating grooves (91) provided at corresponding positions of the first pulley (71) to accommodate the engaging projections (90) of the connector (60).

2. The bread maker according to claim 1, wherein a driving force generated by the driving motor (26) is used to rotate the first kneading drum (13) and transmitted to the first driving shaft part (41) of the first kneading drum (13) connected to the output shaft (55) and the connector (60) by the reduction gear (50) located in a first part of the driving motor (26).

3. The bread maker according to claim 1 or claim 2, wherein the reduction gear (50) further comprises a worm gear set having a worm (53) and a worm wheel (54) in a gear case (51) located under the driving motor (26).

4. The bread maker according to claim 3, wherein the worm (53) is coupled to an end of a driving motor shaft, and the worm wheel is coupled to the output shaft (52) which is connected to the driving shaft part (41) of the first kneading drum (13) by the connector (60) and engaged with the worm (53).

5. The bread maker according to claim 4, wherein one side of the connector (60) is connected to the output shaft (55) having the worm wheel (54) and a other side of the connector (60) is connected to the first pulley (71) rotatably connected to the driving shaft part (41) of the first kneading drum (13).

6. The bread maker according to claim 5, wherein the connector (60) transmits the driving force from a motor (26) by the reduction gear (50) to the first kneading drum (13).

7. The bread maker according to any one of claims 1-6, wherein the plurality of engaging projections (90) are projected in a radial direction relative to an axis of the output shaft (55) on the outer surface of the connector (60).

8. The bread maker according to any one of claims 1-7, wherein the plurality of projections accommodating grooves (91) of the first pulley (71) are distributed in a radical direction relative to an axis of the output shaft (55) and match the engaging projections (90).

9. A driving mechanism, comprising:
a driving motor (26) generating a driving force to rotate a first drum (13);
a reduction gear (50) controlling the driving force of the driving motor (26) coupled to an output shaft transmitting the driving force to the first drum (13);
a connector connecting the output shaft (55) and the first drum (13);
a first pulley (71) rotatably connected to the first drum (13);
a second pulley (70) rotatably connected to a second drum (11);
a driving belt (80) connected to the first and second pulleys (70, 71) to rotate the first and second drums (13, 11); **characterized by**:
an engager connecting one side of the first pulley to the connector (60);
wherein the engager includes a plurality of engaging projections (90) projected in a radial direction relative to an axis of the output shaft (55) on an outer surface of the connector (60) and a plurality of projections accommodating grooves (91) formed in the first pulley (71) to accommodate the engaging projections (90).

10. The drum driving mechanism according to claim 9, wherein at least one engaging projection (90) is located on the outer surface of the connector (60).

11. The drum driving mechanism according to claim 9 or claim 10, wherein the reduction gear (50) further includes a worm (53) connected to a shaft (55) of the driving motor (26) and a worm wheel (54) engaged with the worm (53), and a gear case (51) accommodating the worm (53) and the worm wheel (54).

## Patentansprüche

1. Brotbackmaschine, die ein Ofenfach (10) und ein Bauteilfach (5) umfasst, wobei das Bauteilfach (5) des Welteren einen Walzenantriebsmechanismus umfasst und der Walzenantriebsmechanismus enthält:
einen Antriebsmotor (28), der eine erste Knetwalze (13) dreht;
ein Reduktionsgetriebe (50), das die Anzahl von Drehungen des Antriebsmotors (26) steuert:
einen Verbinder (60), der eine Ausgangswells (55) des Reduktionsrades (50) und eine erste Antriebswelle (40) verbindet, die Tell der ersten Knetwalze (13) ist;
eine zweite Riemenscheibe (70), die drehbar mit einem zweiten Antriebswellenteil einer zweiten Knetwaize (11) gekoppelt ist;
eine erste Riemenscheibe (71), die drehbar mit dem ersten Antriebswellenteil (41) der ersten Knetwalze (13) gekoppelt ist;
einen Antriebsriemen (80), der mit der ersten und der zweiten Riemenscheibe (71, 70) gekoppelt ist und die erste sowie die zweite Knetwalze (13, 11) dreht; **gekennzeichnet durch:**
ein Eingriffsglied, das zwischen dem Verbinder (60) und der ersten Riemenscheibe (13) vorhanden ist;
wobei das Eingriffsglied des Weiteren eine Vielzahl von Eingriffsvorsprüngen (90), die In einer radialen Richtung an einer Außenflächenseite des Verbinders (60) vorstehen, und eine Vielzahl von Vorsprüngen enthält die Nuten (91) aufnehmen, die an entsprechenden Positionen der ersten Riemenscheibe (71) vorhanden sind, um die Eingriffsvorsprünge (90) des Verbinders (60) aufzunehmen.

2. Brotbackmaschine nach Anspruch 1, wobei eine Antriebskraft, die durch den Antriebsmotor (26) erzeugt wird, dazu dient, die erste Knetwalze (13) zu drehen, und auf den ersten Antriebswellenteil (41) der ersten Knetwalze (13), der mit der Ausgangswelle (55) und dem Verbinder (80) verbunden ist, durch das Reduktionsgetriebe (50) übertragen wird, das sich in einem ersten Teil des Antriebsmotors (26) befindet.

3. Brotbackmaschine nach Anspruch 1 oder 2, wobei das Reduktionsgetriebe (50) des Weiteren eine Schneckenradgruppe umfasst, die eine Schnecke (53) und ein Schneckenrad (54) in einem Getriebegehäuse (51) aufweist, das sich unter dem Antriebsmotor (26) befindet.

4. Brotbackmaschine nach Anspruch 3, wobei die Schnecke (53) mit einem Ende einer Antriebsmotorwelle gekoppelt ist und das Schneckenrad mit der Ausgangswelle (52) gekoppelt ist, die mit dem Antriebswellenteil (41) der ersten Knetwalze (13) durch den Verbinder (60) verbunden ist, und mit der Schnecke (53) in Eingriff ist.

5. Brotbackmaschine nach Anspruch 4, wobei eine Seite des Verbinders (60) mit der Ausgangswelle (55) verbunden ist, die das Schneckenrad (54) aufweist, und eine andere Seite des Verbinders (60) mit der ersten Riemenscheibe (71) verbunden ist, die drehbar mit dem Antriebswellenteil (41) der ersten Knetwalze (13) verbunden ist.

6. Brotbackmaschine nach Anspruch 5, wobei der Verbinder (60) die Antriebskraft von einem Motor (28) durch das Reduktionsgetriebe (50) auf die erste Knetwalze (13) ûberträgt.

7. Brotbackmaschine nach einem der Ansprüche 1 - 6, wobei die Vielzahl von Eingriffsvorsprüngen (90) in einer radialen Richtung relativ zu einer Achse der Ausgangswelle (55) an der Außenfläche des Verbinders (60) vorstehen.

8. Brotbackmaschine nach einem der Ansprüche 1 - 7, wobei die Vielzahl von Vorsprüngen, die Nuten (91) der ersten Riemenscheibe (71) aufnehmen, in einer radialen Richtung relativ zu einer Achse der Ausgangswelle (55) verteilt sind und den eingreifenden Vorsprüngen (90) entsprechen.

9. Antriebsmechanismus, der umfasst:
einen Antriebsmotor (26), der eine Antriebskraft erzeugt, um eine erste Walze (13) zu drehen:
ein Reduktionsgetriebe (50), das die Antriebskraft des Antriebsmotors (28) steuert und mit einer Ausgangswelle verbunden ist, die die Antriebskraft auf die erste Walze (13) überträgt;
einen Verbinder, der die Ausgangswelle (55) und die erste Walze (13) verbindet;
eine erste Riemenscheibe (71), die drehbar mit der ersten Walze (13) verbunden ist;
eine zweite Riemenscheibe (70), die drehbar mit einer zweiten Walze (11) verbunden ist;
einen Antriebsriemen (80), der mit der ersten und der zweiten Riemenscheibe (70, 71) verbunden ist, um die erste und die zweite Walze (13, 11) zu drehen,
**gekennzeichnet durch**:
ein Eingriffsglied, das eine Seite der ersten Riemenscheibe mit dem Verbinder (60) verbindet;
wobei das Eingriffsglied eine Vielzahl von Eingriffsvorsprüngen (90), die in einer radialen Richtung relativ zu einer Achse der Ausgangswelle (55) an einer Außenfläche des Verbinders (60) vorstehen, und eine Vielzahl von Vorsprüngen enthält, die Nuten (91) aufnehmen, die In der ersten Riemenscheibe (71) ausgebildet sind, um die Eingriffsvorsprünge (80) aufzunehmen.

10. Walzenantriebsmechanismus nach Anspruch 9, wobei sich wenigstens ein Eingriffsvorsprung (90) an der Außenfläche des Verbinders (60) befindet.

11. Walzenantriebsmechanismus nach Anspruch 9 oder Anspruch 10, wobei das Reduktionsgetriebe (50) des Weiteren eine Schnecke (53), die mit einer Welle (65) des Antriebsmotors (26) verbunden ist, und ein Schneckenrad (54), das mit der Schnecke (53) In Eingriff ist, sowie ein Getriebegehäuse enthält, das die Schnecke (53) und das Schneckenrad (54) aufnimmt.

## Revendications

1. Machine à pain comportant un compartiment de four (10) et un compartiment de composants (5), dans laquelle le compartiment de composants (5) comporte en outre un mécanisme d'entraînement à tambours, le mécanisme d'entraînement à tambours comportant :
un moteur d'entraînement (26) faisant tourner un premier tambour de pétrissage (13),
un engrenage de réduction (50) commandant le nombre de rotations du moteur d'entraînement (26),
un connecteur (60) connectant un arbre de sortie (55) de l'engrenage de réduction (50) et une première partie d'arbre d'entraînement (41) du premier tambour de pétrissage (13),
une seconde poulie (70) couplée de manière rotative à une seconde partie d'arbre d'entraînement d'un second tambour de pétrissage (11),
une première poulie (71) couplée de manière rotative à la première partie d'arbre d'entraînement (41) du premier tambour de pétrissage (13),
une courroie d'entraînement (80) couplée aux première et seconde poulies (71, 70) et faisant tourner les premier et second tambours de pétrissage (13, 11), **caractérisée par** :
un dispositif de mise en prise agencé entre le connecteur (60) et la première poulie (13),
dans laquelle le dispositif de mise en prise comporte en outre une pluralité de saillies de mise en prise (90) faisant saillie dans une direction radiale sur un côté de surface extérieure du connecteur (60), et une pluralité de gorges de réception de saillie (91) agencées dans des positions correspondantes de la première poulie (71) pour accepter les saillies de mise en prise (90) du connecteur (60).

2. Machine à pain selon la revendication 1, dans laquelle une force d'entraînement générée par le moteur d'entraînement (26) est utilisée pour faire tourner le premier tambour de pétrissage (13), et est transmise à la première partie d'arbre d'entraînement (41) du premier tambour de pétrissage (13) connectée à l'artre de sortie (55) et au connecteur (60) par l'engrenage de réduction (50) positionné dans une première partie du moteur d'entraînement (26).

3. Machine pain selon la revendication 1 ou 2, dans laquelle l'engrenage de réduction (50) comporte en outre un engrenage à vis sans fin ayant une vis sans fin (53) et une roue à vis sans fin (54) dans un carter d'engrenage (51) positionné sous le moteur d'entraînement (26).

4. Machine à pain selon la revendication 3, dans laquelle la vis sans fin (53) est couplée à une extrémité d'un arbre de moteur d'entraînement, et la roue à vis sans fin est couplée à l'arbre de sortie (52) qui est connecté à la partie d'arbre d'entraînement (41) du premier tambour de pétrissage (13) par le connecteur (60), et en prise avec la vis sans fin (53).

5. Machine à pain selon la revendication 4, dans laquelle un premier côté du connecteur (60) est connecté à l'arbre de sortie (55) ayant la roue à vis sans fin (54), et un autre côté du connecteur (60) est connecté à la première poulie (71) connectée de manière rotative à la partie d'arbre d'entraînement (41) du premier tambour de pétrissage (13).

6. Machine à pain selon la revendication 5, dans laquelle le connecteur (60) transmet la force d'entraînement à partir d'un moteur (26) par l'engrenage de réduction (50) au premier tambour de pétrissage (13).

7. Machine à pain selon l'une quelconque des revendications 1 à 6, dans laquelle la pluralité de saillies de mise en prise (90) font saillie dans une direction radiale par rapport à un axe de l'arbre de sortie (55) sur la surface extérieure du connecteur (60).

8. Machine à pain selon l'une quelconque des revendications 1 à 7, dans laquelle la pluralité de gorges de réception de saillie (91) de la première poulie (71) sont réparties dans une direction radiale par rapport à un axe de l'arbre de sortie (55), et s'apparient aux saillies de mise en prise (90).

9. Mécanisme d'entraînement, comportant :
un moteur d'entrainement (26) générant une force d'entraînement pour faire tourner un premier tambour (13),
un engrenage de réduction (50) commandant la force d'entraînement du moteur d'entraînement (26) couplé à un arbre de sortie transmettant la force d'entraînement au premier tambour (13),
un connecteur connectant l'arbre de sortie (55) et le premier tambour (13),
une première poulie (71) connectée de manière rotative au premier tambour (13),
une seconde poulie (70) connectée de manière rotative à un second tambour (11),
une courroie d'entraînement (80) connectée aux première et seconde poulies (70, 71) pour faire tourner les premier et second tambours (13, 11), **caractérisé par** :
un dispositif de mise en prise connectant un côté de la première poulie au connecteur (60),
dans lequel le dispositif de mise en prise comporte une pluralité de saillies de mise en prise (90) faisant saillie dans une direction radiale par rapport à un axe de l'arbre de sortie (55) sur une surface extérieure du connecteur (60), et une pluralité de gorges de réception de saillie (91) formées dans la première poulie (71) pour recevoir les saillies de mise en prise (90).

10. Mécanisme d'entrainement de tambour selon la revendication 9, dans lequel au moins une saillie de mise en prise (90) est positionnée sur la surface extérieure du connecteur (60).

11. Mécanisme d'entraînement de corps cylindriques selon la revendication 9 ou 10, dans lequel l'engrenage de réduction (50) comporte en outre une vis sans fin (53) connectée à un arbre (55) du moteur d'entraînement (26), et une roue à vis sans fin (54) mise en prise avec la vis sans fin (53), et un carter d'engrenage (51) recevant la vis sans fin (53) et la roue à vis sans fin (54).
